# EUROPEAN PATENT APPLICATION

(11) **EP 1 092 655 A2**
(43) Date of publication of application: **18.04.2001**
(21) Application number: 00122457.5
(22) Date of filing: 13.10.2000
(51) Int. Cl.: B65G 1/04

(54) **Automated store**

(30) Priority: 15.10.1999 IT TO990902
(71) Applicant: BERTELLO S.p.A., I-12011 Borgo San Dalmazzo (IT)
(72) Inventor: Pontini, Massimo, 10090 San Raffaele Cimena (IT); Franco, Renato, 12010 Cervasca (IT); Ghibaudo, Giuseppe, 12010 Roasca (IT)
(74) Representative: Eccetto, Mauro

(57) **Abstract**

An automated store (1) having a number of seats (3), each for receiving a relative container; a conveying member (4) for moving the containers and movable along a deposit/withdrawal path (A); a powered actuating device (10) for moving the conveying member (4) to and from the seat (3) along the deposit/withdrawal path (A); and an optical-fiber assembly (17) for detecting the position of the conveying member (4) along the deposit/withdrawal path (A).

## Description

The present invention relates to an automated store.

More specifically, the present invention relates to an automated vertical store, to which the following description refers purely by way of example.

Known automated vertical stores normally comprise a fixed frame, and shelving in turn comprising a number of horizontal shelves, each for supporting a relative container. The containers are moved to and from the relative shelves by a lift assembly comprising a supporting surface for the containers to be moved, and a movable supporting frame defining the supporting surface and connected to the fixed frame by a guide and slide assembly to move along a vertical path.

In most applications, the supporting frame is moved along the guide by a powered rack and gear assembly comprising a rack connected integrally to the fixed frame and parallel to the vertical guide, and a gear meshing with the rack and fitted to the output shaft of an electric motor.

Known stores of the above type also comprise a detecting device for detecting the position of the supporting frame along the guide. Known detecting devices normally comprise an angular position detector or so-called "encoder", which is carried by the supporting frame and is connected to the rack by an auxiliary gear separate from the one fitted to the motor shaft and connected in rotary manner to the supporting frame.

Though widely used, known stores of the above type are inefficient and unreliable, mainly on account of the construction characteristics of the detecting devices used. That is, the accuracy with which the axial position of the supporting frame is detected depends largely on the meshing accuracy and operating conditions of the auxiliary gear and rack, the meshing of which, in addition to initial slack caused by machining tolerances, varies with time due to inevitable wear of the auxiliary gear and rack, and the gradual accumulation on the rack of dust and other contaminants normally present in the working environment of the store.

Moreover, the detecting devices used are in themselves particularly expensive, are relatively heavy, take a relatively long time to install and set, and call for continual checking and maintenance.

It is an object of the present invention to provide an automated vertical store featuring a position detecting device designed to eliminate the aforementioned drawbacks.

According to the present invention, there is provided an automated store comprising a number of seats, each for receiving a relative container; a conveying member for moving said containers and movable along a deposit/withdrawal path; powered actuating means for moving said conveying member to and from said seats along said deposit/withdrawal path; and position detecting means for detecting the position of said conveying member along said deposit/withdrawal path; characterized in that said position detecting means comprise an optical assembly.

A non-limiting embodiment of the invention will be described by way of example with reference to the accompanying drawings, in which:
Figure 1 shows a side view, with parts removed for clarity, of a preferred embodiment of the automated vertical store according to the present invention;
Figure 2 shows a larger-scale section along line II-II in Figure 1;
Figure 3 shows a larger-scale view of a detail in Figure 1;
Figure 4 shows a view in the direction of arrow A in Figure 3.

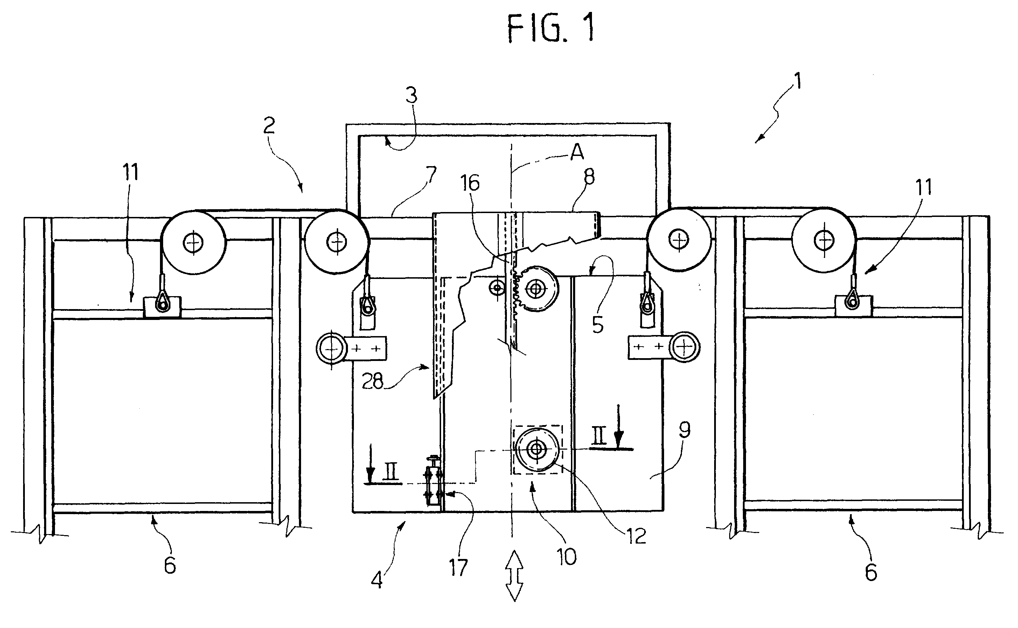

Number 1 in Figure 1 indicates as a whole an automated vertical store comprising a fixed frame 2 defining a number of seats 3 (only one shown), each for receiving a relative container (not shown). Store 1 also comprises a movable supporting and conveying frame 4, which comprises a supporting surface 5 for supporting the containers to be moved, and is connected to fixed frame 2 by a known guide and slide assembly (not shown) to move along a substantially vertical path A to deposit/withdraw the containers.

In the particular example described, fixed frame 2 comprises two lateral structures 6 joined at the top ends by a number of cross members 7 (only one shown in Figure 1); and a vertical plate body 8 extending between the two structures 6 and connected integrally to cross members 7.

Movable supporting and conveying frame 4 comprises a plate portion 9 facing body 8, and is movable in opposite directions along path A by a powered actuating device 10 cooperating with a pair of known counterweight assemblies 11 not described in detail. In the particular example described, device 10 comprises an electric motor 12, which is housed inside frame 4, is fitted stably to portion 9, and is controlled by a known central control unit 13. Motor 12 comprises an output shaft 14 extending, perpendicularly to path A, through portion 9 towards body 8, and fitted with a gear 15 forming part of device 10. Device 10 also comprises a rack 16 connected integrally to body 8, preferably by means of a number of screws, and extending vertically in a direction parallel to deposit/withdrawal path A.

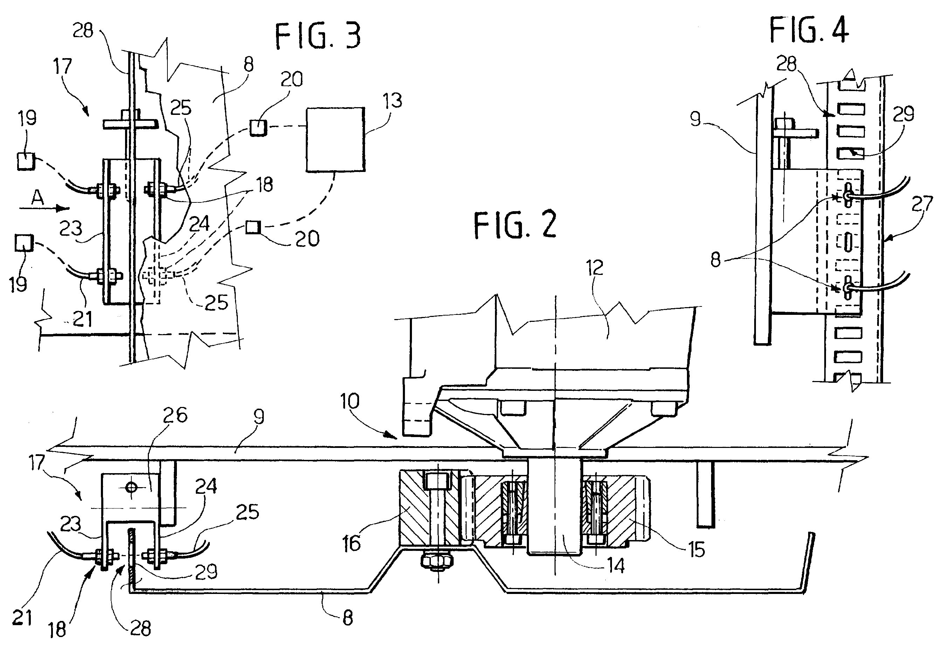

The axial position of supporting and conveying frame 4 along path A is detected by an optical-fiber detecting assembly 17, which, as shown in Figures 3 and 4, comprises two separate detecting devices 18 aligned in a direction parallel to path A. Each device 18 comprises a respective light source 19 for generating a respective light beam; a respective known receiver 20 connected to central control unit 13; and a respective optical fiber 21 extending from respective source 19 and having an end portion connected integrally to a first supporting plate 23 carried by frame 4. More specifically, plate 23 extends parallel to path A and parallel to and facing a second supporting plate 24 also carried by frame 4. Plate 24 supports another two optical fibers 25, each of which forms part of respective device 18, is connected to a respective receiver 20, and has a respective end portion connected to plate 24 and facing the end portion of a respective fiber 21. In the particular example shown, plates 23 and 24 form part of a single fastening member 26 connected adjustably to a bracket of movable frame 4, preferably by means of a number of screws (not shown).

As shown in Figure 2, and particularly in Figures 3 and 4, assembly 17 also comprises an elongated plate member 27, which is common to both devices 18, is connected integrally to body 8 and therefore to fixed frame 2, and extends partly between plates 23 and 24 and parallel to path A and to plates 23 and 24, so as to intercept the light beams transmitted by optical fibers 21. More specifically, member 27 has a column 28 of identical, equally spaced through openings 29, each of which is formed in such a position as to permit, as movable frame 4 moves up or down, the passage of a light signal from one fiber 21 to the relative facing fiber 25. At which point, the light signal is transmitted from fiber 25 to the relative receiver 20, which, in known manner and in response to the incoming light signal, transmits a corresponding electric signal to central control unit 13. By counting the electric signals, and given the distribution of openings 29, central control unit 13 is able to drive motor 12 so as to move frame 4 into the desired position to withdraw or deposit the containers in the usual way.

Unlike known solutions, using an optical-fiber position detecting assembly therefore eliminates any contact between surfaces in relative motion, and in particular any coupling or sliding contact between the fixed and movable portions of the detecting assembly.

Moreover, using optical fibers, the position detecting assembly is not only reliable but also extremely lightweight and cheap to produce. The possibility of dispensing with mechanical, e.g. gear, transmissions, while at the same time achieving a drastic reduction in weight, provides, as compared with existing solutions, for drastically reducing inertia and so greatly improving response time.

Clearly, changes may be made to vertical store 1 as described herein without, however, departing from the scope of the accompanying Claims. In particular, assembly 17 may comprise a number of devices 18 other than that indicated by way of example, and the characteristics of devices 18 may be other than those described. For example, as opposed to being carried by frame 4, the optical fibers may be connected to fixed frame 2. In which case, the elongated member would be movable together with frame 4. Whichever the case, the elongated member may be formed otherwise than as described and be, for example, a toothed type.

Finally, the characteristics of store 1 may be other than as described herein, so that deposit/withdrawal path A is not vertical, as in the example described.

## Claims

1. An automated store (1) comprising a number of seats (3), each for receiving a relative container; a conveying member (4) for moving said containers and movable along a deposit/withdrawal path (A); powered actuating means (10) for moving said conveying member (4) to and from said seats (3) along said deposit/withdrawal path (A); and position detecting means (17) for detecting the position of said conveying member (4) along said deposit/withdrawal path (A); characterized in that said position detecting means comprise an optical assembly (17).

2. A store as claimed in Claim 1, characterized in that said optical assembly comprises an optical-fiber device (17).

3. A store as claimed in Claim 1 or 2, characterized in that said optical assembly (17) comprises at least one detecting device (18) in turn comprising generating means (19, 21) for generating a light beam, receiving means (20, 25) for receiving said light beam, and intercepting means (27) for intercepting said light beam and interposed between said generating means (19, 21) and said receiving means (20, 25).

4. A store as claimed in Claim 3, characterized in that said optical assembly (17) comprises two said detecting devices (18).

5. A store as claimed in Claim 4, characterized in that said detecting devices (18) are parallel to each other.

6. A store as claimed in Claim 4 or 5, characterized in that said intercepting means comprise a single member (27) common to both the detecting devices (18).

7. A store as claimed in Claim 6, characterized in that said member (27) extends parallel to said path (A) and comprises a column (28) of through openings (29).

8. A store as claimed in any one of Claims 3 to 7, characterized in that said intercepting means (27) are located in a fixed position with respect to said seats (3); and said generating means (19, 21) and said receiving means (20, 25) are carried by said conveying member (4).
